# EUROPEAN PATENT SPECIFICATION

(11) **EP 0 764 897 B1**
(45) Date of publication and mention of the grant of the patent: **23.06.2004**
(21) Application number: 95115067.1
(22) Date of filing: 25.09.1995
(51) Int. Cl.: G06F 1/26

(54) **Electrical circuit arrangement**
Elektrische Schaltungsanordnung
Dispositif de circuit électrique

(43) Date of publication of application: 26.03.1997
(73) Proprietor: Carlo Gavazzi Services AG, 6312 Steinhausen (CH)
(72) Inventor: Skovgaard, Ole, DK-8370 Hadsten (DK); Sörensen, Kent, DK-8370 Hadsten (DK)
(74) Representative: Kehl, Günther, Dipl.-Phys.

(56) References cited:
- US-A- 4 886 979
- US-A- 5 396 636
- IBM TECHNICAL DISCLOSURE BULLETIN, vol. 38, no. 4, April 1995 NEW YORK US, page 463 XP 000516218 'Power supply control via monitoring of communications signals'

## Description

The present invention generally relates to the field of electrical circuit arrangements. In particular, the present invention relates to an electrical circuit arrangement comprising at least one remote communication unit, which is connected via a multiplex two-wire bus to a central bus driver unit.

The technical literature discloses a variety of electrical circuit arrangements applying the multiplex two-wire technique the use of which guarantees simultaneous and equitable transmission of all data between the central unit and the remote communication units. Due to the virtually unlimited possibilities of channel selection in the time-division multiplex method, it is possible in this way for virtually any arbitrary number of remote communication units to be connected to the central unit, as a result of which the traceability of the electrical circuit arrangement is maintained at any time because of the use of the multiplex two-wire technique. In addition, it permits the most varied and differing possibilities of use and application because of its very simple basic principle.

In spite of the advantages mentioned above, the power supply of the remote communication units has been a problem up to now because electrical circuit arrangements known to date require for each remote communication unit a respective galvanically separated power supply device in order to avoid equilibration currents and thus a negative effect on the accuracy of the data transmitted to and provided by the remote communication units. As a consequence, efforts to miniaturize such electrical circuit arrangements have been jeopardized by the space required by these power supply devices in the respective remote communication unit. Because of this, the applicability of electrical circuit arrangements according to the prior art has left much to be desired. Therefore, it has often been not possible to cover a broader range of possible circuit applications or to choose the best, safest and most efficient circuit principle for the specific application. In addition to this not inconsiderable deficiency, the provision of an individual power supply device in connection with each respective remote communication unit shows up diverse disadvantages, one of which are huge costs in the case of a simultaneous arrangement of a plurality of, or even many remote communication units. Apart from that, the greater the number of power supply devices is, the more complicated is the overall circuit and the higher is the probability of malfunction of one or even more remote communication units.

In consideration of these problems, it is an object of the present invention to provide an electrical circuit arrangement with one common power supply for all remote communication units in order to overcome the necessity of providing a plurality of, or even many individual power supply devices. The provision of only one common power supply would guarantee a synergetic effect concerning a secure and reliable function of this electrical circuit arrangement. Besides, the invention aims at designing an electrical circuit arrangement that is cheap and simple, i. e. costs and space, required by individual power supply devices, should be reduced because of the more compact embodiment which is also important for the object of miniaturizing the electrical circuit arrangement. It is a further object of the present invention to make possible the provision of a high number of remote communication units distributed over a large distance without the accuracy of the data transmission being jeopardized by the voltage drop between the remote communication units.

According to the invention, these objects are achieved in an electrical circuit arrangement of the type mentioned at the beginning of this specification, due to the fact that a central supply unit supplying power to the remote communication units via a common supply line is connected to the multiplex two-wire bus and that a switching means comprising a control input terminal connected to the multiplex two-wire bus interrupts the power supply during time periods of signal activity on the multiplex two-wire bus.

German patent document DE 42 00 935 discloses a circuit for supplying power from a common voltage source to the analogue portions of several analogue-digital converters, which are controlled by micro-processors, and to analogue value pre-processing units. Multipolar interrupters controlled by micro-processors are provided between the common voltage source and the power input terminals of the analogue portions of the analogue-digital converters and the analogue value pre-processing units, respectively. Auxiliary energy sources assigned to the power input terminals of the analogue portions of the analogue-digital converters and to the analogue value pre-processing units are provided, which supply power to the analogue portions of the analogue-digital converters and to the analogue value pre-processing units when the respective multipolar interrupter is open. While it was achieved to supply several analogue-digital converting units by a common power supply in this circuit it was absolutely not considered that there may be a voltage drop over the supply line which could jeopardize the data transmission and/or the accuracy of the measurement. This is especially the case if the number of analogue-digital converting units is high and these are distributed over a large distance. So there is the serious problem of the voltage drop over the supply line negatively influencing the data transmission and/or the accuracy of the measurement.

According to the present invention, the power supply is interrupted during time periods of signal activity in the multiplex two-wire bus preferably comprising a signal line and a ground line. By interrupting the power supply during time periods of signal activity in the multiplex two-wire bus, a signal offset excessing the operational voltage range is avoided. Consequently, the voltage drop over the common supply line, wherein the current is advantageously direct current (DC), does not negatively influence the accuracy of the data transmission in any way.

In a desirable embodiment of the present invention, the at least one remote communication unit comprises a rectifying means, which is conveniently a fast rectifying diode, and a charge storing means, which is preferably a capacitor, connected in series to the rectifying means and large enough to supply the total energy consumption of its remote communication unit during the time periods in which the conveniently digital signals are transmitted via the multiplex two-wire bus.

The switching means, which is preferably an N-channel MOS transistor or a similar fast switching device, is advantageously controlled via its control input terminal by a sensing means desirably embodied as a voltage comparator and sensing the levels of the signals in the multiplex two-wire bus.

According to an especially convenient embodiment of the present invention, the central bus driver unit comprises multiplex channel generating means with addressing means for addressing the at least one remote communication unit, multiplex receiving means for receiving and collecting the digital signals transmitted via the multiplex two-wire bus, and multiplex processing means for processing the digital signals transmitted via the multiplex two-wire bus. Through connection to the multiplex two-wire bus, the multiplex channel generating means is connected both to the multiplex receiving means and to the at least one remote communication unit having an address in the multiplex two-wire system. The use of the multiplex two-wire system guarantees simultaneous and equitable transmission of all data between the central unit and the remote communication units. Due to the virtually unlimited possibilities of channel selection in the time-division multiplex method, it is possible in this way for virtually any arbitrary number of remote communication units to be connected to the central unit, as a result of which the traceability of the electrical circuit arrangement is maintained at any time because of the use of the multiplex two-wire technique. In addition, it permits the most varied and differing possibilities of use and application because of its very simple basic principle.

According to a further advantageous embodiment of the present invention, the multiplex channel generating means comprises a clock generating means and a pulse generating means generating a pulse train the pulses of which correspond to different transmitting time channels, and the multiplex receiving means comprises decoder means by means of which the multiplex receiving means is activated during at least one transmitting time channel assigned to it. As a result, the accurate transmission of digital data between the multiplex receiving means (for receiving and collecting the digital signals transmitted via the multiplex two-wire bus) and the remote communication units is accomplished. Owing to the provision of the decoder means, a unique assignment of digital data arriving from the respective remote communication unit is ensured in this case, and this not only guarantees the desired transmission reliability, but also substantially increases the transmission rate.

The present invention will be described in more detail below with reference to the exemplary embodiments which are schematically illustrated in the following drawings, in which:
Figure 1 shows a block diagram of an electrical circuit arrangement according to the invention;
Figure 2 shows an enlarged, more detailed section of the block diagram of the electrical circuit arrangement of Figure 1;
Figure 3 shows a block diagram of a central bus driver unit of the electrical circuit arrangement of Figure 1;
Figure 4 shows a pulse train the pulses of which correspond to different transmission time channels;
Figure 5 shows a block diagram of a multiplex channel generating means of the central bus driver unit of Figure 3; and
Figure 6 shows an enlarged, more detailed section of the pulse train of Figure 4.

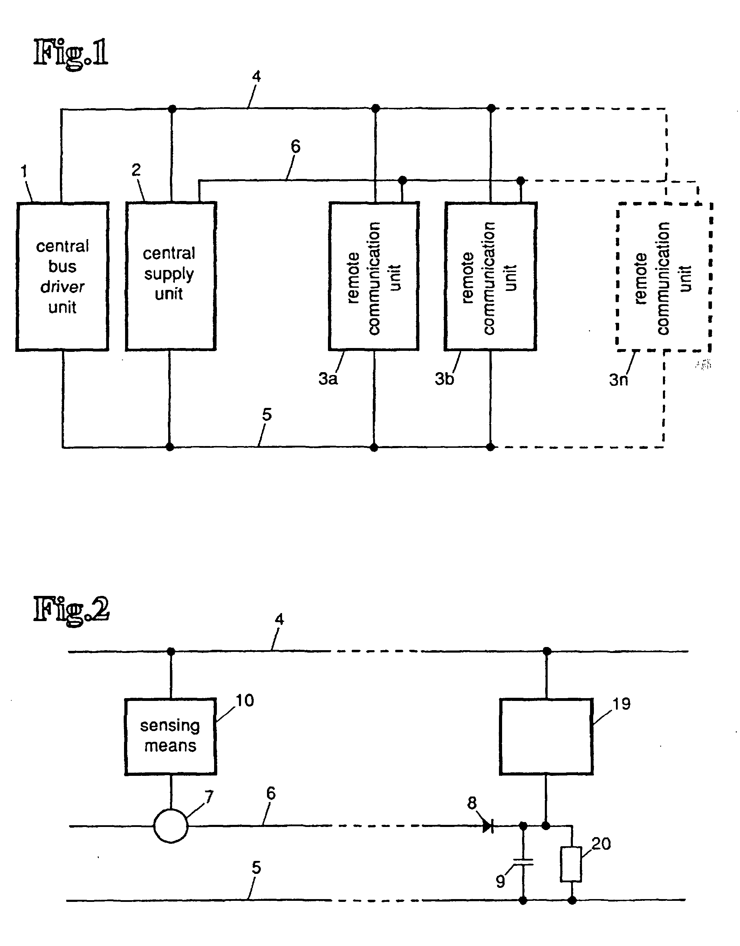

An example of realizing the electrical circuit arrangement in accordance with the invention is illustrated in Figure 1. It comprises a central bus driver unit 1, which can be constructed, for instance, in the form of a CPU (= central processing unit) and to which n remote communication units 3 are connected by means of a multiplex two-wire bus 4, 5, it being the case that n ≥ 1 holds. It is also shown in Figure 1 that the multiplex two-wire bus 4, 5 comprises two wires, namely a signal line 4 and a ground line 5. In addition, a central supply unit 2, which is connected to the multiplex two-wire bus 4, 5 and which can form a structural unit (not shown) with the central bus driver unit 1, supplies power to the remote communication units 3 via a common supply line 6. In this context, it should be mentioned that the signals which are transmitted via the multiplex two-wire bus 4, 5 are digital and that the remote communication units 3 can respectively comprise an input module for digital signals and an output module. It may further be interesting for a man skilled in the art that the distance between the central bus driver unit 1 and the remote communication units 3 can be more than 100 metres.

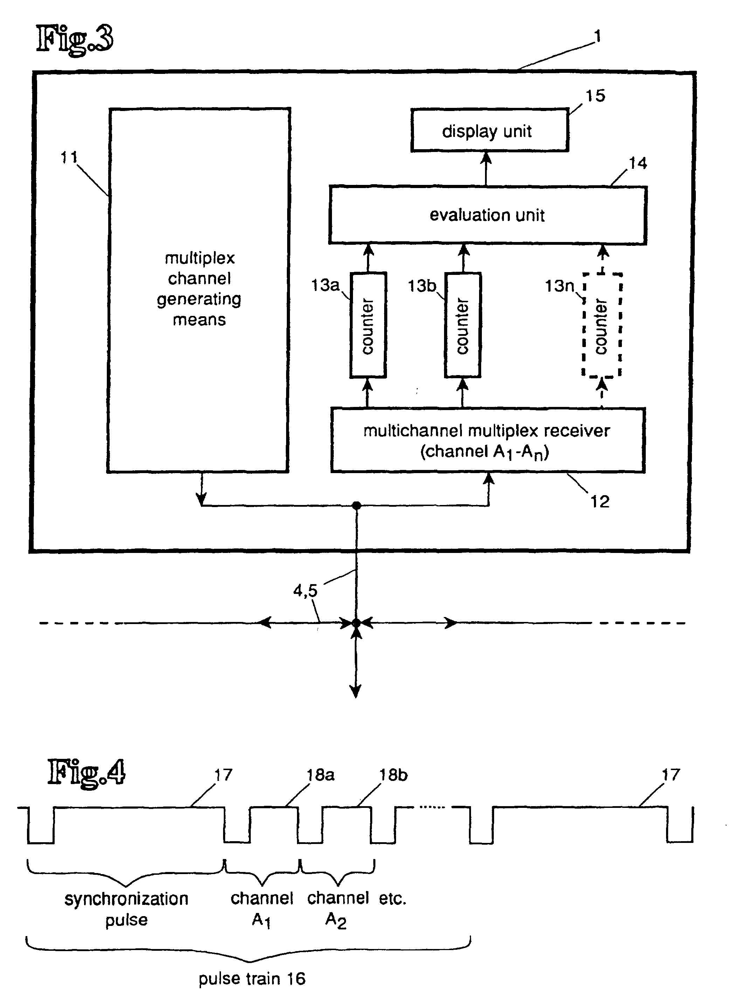

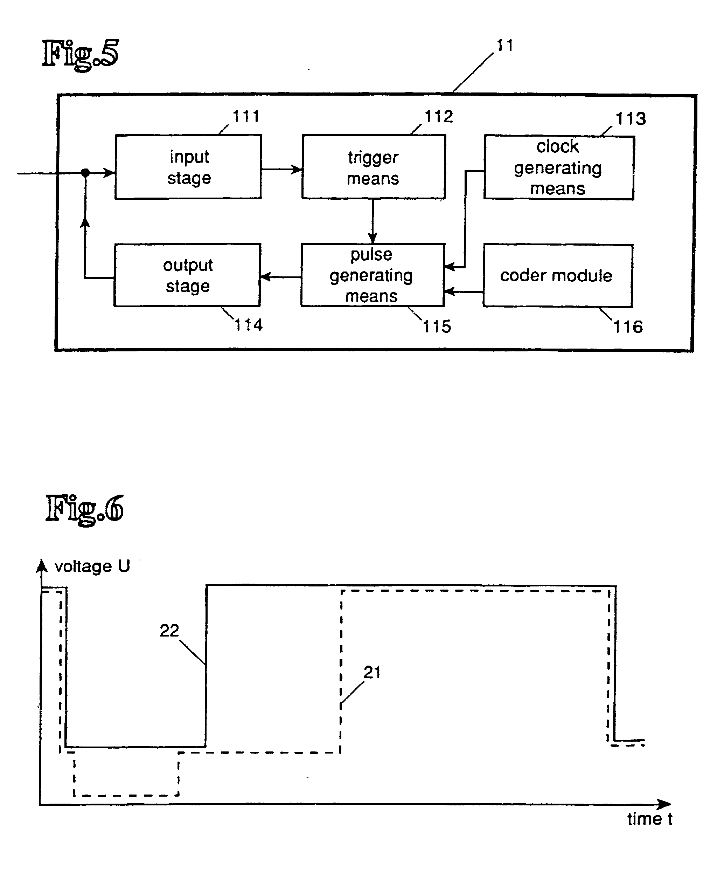

Figure 2 shows an enlarged and more detailed section of a block diagram of the electrical circuit arrangement of Figure 1. A switching means 7 is to be seen which comprises a control input terminal connected to the multiplex two-wire bus 4, 5. This switching means 7 is controlled via its control input terminal by a sensing means 10, which can be implemented as a voltage comparator sensing the levels of the signals (illustrated below in Figures 4 and 6) in the multiplex two-wire bus 4, 5. According to the invention, this switching means 7, which can be implemented as an N-channel MOS transistor or a similar fast switching device, interrupts the power supply during time periods of signal activity in the multiplex two-wire bus 4, 5. By interrupting the power supply during time periods of signal activity in the multiplex two-wire bus 4, 5, a signal offset excessing the operational voltage range is avoided. Consequently, the voltage drop over the common supply line 6, wherein the current is direct current (DC), does not negatively influence the accuracy of the data transmission in any way, even if the distance between the central bus driver unit 1 and the remote communication units 3 is more than 100 metres, as mentioned above.

It can further be taken from Figure 2 that the remote communication units 3 respectively comprise a rectifying means 8 and a charge storing means 9 connected in series to the rectifying means 8. In Figure 2, the rectifying means is a fast rectifying diode 8 and the charge storing means is a capacitor 9 which is large enough to supply the total energy consumption of its remote communication unit 3. Besides, an input/output communication logic stage 19 and a load/consumption unit 20 connected in parallel to the charge storing means 9 are illustrated in Figure 2.

Figure 3 shows a block diagram of a central bus driver unit 1 of the electrical circuit arrangement of Figure 1. The central bus driver unit 1 comprises multiplex channel generating means 11 with addressing means for addressing the remote communication units 3. Furthermore, multiplex receiving means 12, 13 for receiving and collecting the digital signals transmitted via the multiplex two-wire bus 4, 5 are arranged in the form of a multichannel multiplex receiver 12 (channel A₁ to Aₙ) and n counters 13. Finally, multiplex processing means 14, 15, which in the present exemplary embodiment is realized as an evaluation unit 14 and a display unit 15, are provided for processing the digital signals.

The mode of operation of the electrical circuit arrangement according to the invention is to be explained in principle by way of example with the aid of Figures 3 and 4.

The multiplex channel generating means 11 is arranged in the central bus driver unit 1 and forms a structural unit with a synchronization pulse generator (not shown) generating at periodic time intervals a pulse train 16 as shown in Figure 4. This pulse train 16 is composed of a synchronization pulse 17 and a sequence of channel pulses 18a, 18b, ..., 18n, of which in the exemplary embodiment shown here in each case one channel pulse 18a, 18b, ..., 18n is respectively assigned to one of the remote communication units 3 connected to the central bus driver unit 1. Typical temporal orders of magnitude are 8 milliseconds (= ms) for the synchronization pulse 17 and respectively 1 ms for a channel pulse 18a, 18b, ..., 18n, thus producing, for instance, for a n=32-channel system a temporal length of the pulse train 16 having a typical order of magnitude of 40 ms. Such pulse trains 16 succeeding one another are transmitted via the multiplex two-wire bus 4, 5 to the individual remote communication units 3.

The digital signals sent out by the respective remote communication units 3 are transmitted via the multiplex two-wire bus 4, 5 as channel pulses to the multichannel multiplex receiver 12 arranged in the central bus driver unit 1. This multichannel multiplex receiver 12 is set up for multichannel operation, since it successively receives the respective digital signal as channel pulse from all n remote communication units 3. The control required for this successive run is guaranteed in this case by the multiplex channel generating means 11, which releases the corresponding channel Aₖ for the digital signal arriving from the k-th remote communication unit 3, that is to say all n remote communication units 3 are interrogated one after another for the respective digital signal and the latter is respectively received by the multichannel multiplex receiver 12. The further evaluation of the respective digital signal is then performed separately, i. e. in a channel-specific fashion in the counters 13, each being respectively assigned to a remote communication unit 3. If necessary, the evaluation unit 14 is followed by the display unit 15 displaying the data evaluated by means of the counters 13 and of the evaluation unit 14 in a suitable form.

Figure 5 shows an exemplary embodiment for the multiplex channel generating means 11 which comprises an input stage 111, a trigger means 112, a clock generating means 113, an output stage 114, a pulse generating means 115 and a coder module 116. The tasks of the multiplex channel generating means 11 include in this case impressing a digital pulse code onto the multiplex two-wire bus 4, 5 and thus controlling the entire electrical circuit arrangement by clocking each individual module of the electrical circuit arrangement.

The coder module 116 can be used to code the multiplex channel generating means 11 for the generation of, for instance, 8, 16, 32, 64 or 128 channels. In this case, the input stage 111 detects whether the channel the time window of which is presently open is activated by the respectively corresponding remote communication unit 3. Should this be the case, the signal of the trigger means 112 to the pulse generating means 115 changes the pulse shape for the relevant, that is to say the activated channel.

Figure 6 shows in an exemplary fashion a comparison of these two possible pulse shapes. Whereas the dashed line represents the pulse shape 21 for a released and thus activated channel (= digital signal value "1"), the continuous line represents the pulse shape 22 for a blocked channel (= digital signal value "0"). A typical order of magnitude for the maximum pulse height is in this case Uₘₐₓ = 8 volts, and the typical temporal length of such a channel pulse is, for instance, 1 ms, as already mentioned above. In this case, the voltage signals are transmitted using the multiplex two-wire method at typical frequencies of the order of magnitude of 1 kilohertz.

The pulse generating means 115 generates pulse trains 16, which are represented in an exemplary fashion in Figure 4 and which are synchronized by means of the clock generating means 113. The number of channels respectively to be transmitted with these pulse trains 16 is fixed in this case, as mentioned above, by the coder module 116.

The output stage 114, which amplifies the signal and outputs it to the multiplex two-channel bus 4, 5, must be protected against shortcircuiting, since the respective remote communication unit 3 short-circuits the entire multiplex two-wire transmitting system for a time period which amounts approximately to one sixth to one quarter of the temporal length of a channel pulse, in order to indicate thereby that the input stage of the respective remote communication unit 3 is activated.

## Claims

1. An electrical circuit arrangement comprising at least one remote communication unit (3), which is connected via a multiplex two-wire bus (4, 5) to a central bus driver unit (1),
**characterized in that a** central supply unit (2) supplying power to the at least one remote communication unit (3) via a common supply line (6) is connected to the multiplex two-wire bus (4, 5) and that a switching means (7) comprising a control input terminal connected to the multiplex two-wire bus (4, 5) is operable to interrupt the power supply during tume periods of signal activity on the multiplex two-wire bus (4, 5).

2. An electrical circuit arrangement according to claim 1, wherein the multiplex two-wire bus (4, 5) comprises a signal line (4) and a ground line (5).

3. An electrical circuit arrangement according to claim 1 or 2, wherein the current in the common supply line (6) is direct current (DC).

4. An electrical circuit arrangement according to any of the claims 1 to 3, wherein the at least one remote communication unit (3) comprises a rectifying means (8) and a charge storing means (9) connected in series to the rectifying means (8).

5. An electrical circuit arrangement according to claim 4, wherein the rectifying means is a fast rectifying diode (8) and the charge storing means is a capacitor (9) which is large enough to supply the total energy consumption of its remote communication unit (3).

6. An electrical circuit arrangement according to any of the claims 1 to 5, wherein the switching means is an N-channel MOS transistor or a similar fast switching device (7).

7. An electrical circuit arrangement according to any of the claims 1 to 6, wherein the signals which are transmitted via the multiplex two-wire bus (4, 5) are digital.

8. An electrical circuit arrangement according to any of the claims 1 to 7, wherein the switching means (7) is controlled via its control input terminal by a sensing means (10) sensing the levels of the signals in the multiplex two-wire bus (4, 5).

9. An electrical circuit arrangement according to claim 8, wherein the sensing means is a voltage comparator (10).

10. An electrical circuit arrangement according to any of the claims 1 to 9, wherein the central bus driver unit (1) comprises
a) multiplex channel generating means (11) with addressing means for addressing the at least one remote communication unit (3),
b) multiplex receiving means (12, 13) for receiving and collecting the digital signals transmitted via the multiplex two-wire bus (4, 5), and
c) multiplex processing means (14, 15) for processing the digital signals transmitted via the multiplex two-wire bus (4, 5).

11. An electrical circuit arrangement according to claim 10, wherein, through connection to the multiplex two-wire bus (4, 5), the multiplex channel generating means (11) is connected both to the multiplex receiving means (12, 13) and to the at least one remote communication unit (3) having an address in the multiplex two-wire system.

12. An electrical circuit arrangement according to claim 10 or 11, wherein the multiplex channel generating means (11) comprises a clock generating means (113) and a pulse generating means (115) generating a pulse train (16) the pulses of which correspond to different transmitting time channels.

13. An electrical circuit arrangement according to claim 12, wherein the multiplex receiving means (12, 13) comprises decoder means by means of which the multiplex receiving means (12, 13) is activated during at least one transmitting time channel assigned to it.

## Patentansprüche

1. Elektrische Schaltungsanordnung, die wenigstens eine entfernte Kommunikationseinheit (3) aufweist, welche über einen Multiplex-Zweidrahtbus (4, 5) mit einer zentralen Bus-Treibereinheit (1) verbunden ist,
**dadurch gekennzeichnet, dass** eine zentrale Versorgungseinheit (2), die Strom zu der wenigstens einen entfernten Kommunikationseinheit (3) über eine gemeinsame Zuführleitung (6) liefert, mit dem Multiplex-Zweidrahtbus (4, 5) verbunden ist und, dass Schaltungsmittel (7), die einen mit dem Multiplex-Zweidrahtbus (4, 5) verbundenen Steuereingangsanschluß aufweisen, aktiv sind, die Stromzufuhr während zeitlichen Perioden einer Signalaktivität auf dem Multiplex-Zweidrahtbus (4, 5) zu unterbrechen.

2. Elektrische Schaltungsanordnung nach Anspruch 1, bei der der Multiplex-Zweidrahtbus (4, 5) eine Signalleitung (4) und eine Masseleitung (5) aufweist.

3. Elektrische Schaltungsanordnung nach Anspruch 1 oder 2, bei der der Strom in der gemeinsamen Zuführleitung (6) ein Gleichstrom (DC) ist.

4. Elektrische Schaltungsanordnung nach einem der Ansprüche 1 bis 3, bei der die wenigstens eine entfernte Kommunikationseinheit (3) Gleichrichtermittel (8) und Ladungsspeichermittel (9) aufweist, die in Reihe mit den Gleichrichtermitteln (8) geschaltet sind.

5. Elektrische Schaltungsanordnung nach Anspruch 4, bei der die Gleichrichtermittel eine schnelle Gleichrichterdiode (8) sind und die Ladungsspeichermittel ein Kondensator (9) sind, welcher groß genug ist, um den Gesamtenergieverbrauch seiner entfernten Kommunikationseinheit (3) zu liefern.

6. Elektrische Schaltungsanordnung nach einem der Ansprüche 1 bis 5, bei der die Schaltungsmittel ein n-Kanal-MOS-Transistor oder eine ähnlich schnelle Schaltungsvorrichtung (7) sind.

7. Elektrische Schaltungsanordnung nach einem der Ansprüche 1 bis 6, bei der die Signale, welche über den Multiplex-Zweidrahtbus (4, 5) übertragen werden, digital sind.

8. Elektrische Schaltungsanordnung nach einem der Ansprüche 1 bis 7, bei der die Schaltungsmittel (7) über ihren Steuereingangsanschluß durch Sensormittel (10) gesteuert werden, die die Pegel der Signale in dem Multiplex-Zweidrahtbus (4, 5) erfassen.

9. Elektrische Schaltungsanordnung nach Anspruch 8, bei der die Sensormittel ein Spannungskomparator (10) sind.

10. Elektrische Schaltungsanordnung nach einem der Ansprüche 1 bis 9, bei der die zentrale Bus-Treibereinheit (1) folgendes aufweist:
a) Multiplex-Kanalerzeugungsmittel (11) mit Adressierungsmittel zum Adressieren der wenigstens einen entfernten Kommunikationseinheit (3),
b) Multiplex-Empfangsmittel (12, 13) zum Empfangen und Sammeln der digitalen Signale, die über den Multiplex-Zweidrahtbus (4, 5) übertragen werden, und
c) Multiplex-Verarbeitungsmittel (14, 15) zum Verarbeiten der digitalen Signale, die über den Multiplex-Zweidrahtbus (4, 5) übertragen werden.

11. Elektrische Schaltungsanordnung nach Anspruch 10, bei der mittels einer Verbindung zu dem Multiplex-Zweidrahtbus (4, 5) die Multiplex-Kanalerzeugungsmittel (11) sowohl mit den Multiplex-Empfangsmitteln (12, 13) als auch mit der wenigstens einen entfernten Kommunikationseinheit (3) verbunden sind, die eine Adresse in dem Multiplex-Zweidrahtsystem hat.

12. Elektrische Schaltungsanordnung nach Anspruch 10 oder 11, bei der die Multiplex-Kanalerzeugungsmittel (11) Takterzeugungsmittel (113) und Impulserzeugungsmttel (115) aufweisen, die eine Impulsfolge (16) erzeugen, deren Impulse unterschiedlichen Übertragungszeitkanälen entsprechen.

13. Elektrische Schaltungsanordnung nach Anspruch 12, bei der die Multiplex-Empfangsmittel (12, 13) Dekodiermittel aufweisen, durch die die Multiplex-Empfangsmittel (12, 13) während wenigstens einem ihnen zugeordneten Übertragungszeitkanal aktiviert werden.

## Revendications

1. Montage de circuits électriques comprenant au moins une unité de télécommunication (3), qui est connectée à une unité centrale (1) de contrôle de bus par un bus multiplex bifilaire (4, 5),
**caractérisé en ce qu'**une unité d'alimentation centrale (2), qui alimente en énergie ladite au moins une unité de télécommunication (3) au moyen d'une ligne d'alimentation commune (6), est connectée au bus multiplex bifilaire (4, 5), et **en ce que** des moyens de commutation (7) comprenant un terminal de saisie de commandes connecté au bus multiplex bifilaire (4, 5) peuvent être utilisés pour interrompre l'alimentation en énergie pendant des périodes d'activité de signal dans le bus multiplex bifilaire (4, 5).

2. Montage de circuits électriques selon la revendication 1, dans lequel le bus multiplex bifilaire (4, 5) comprend une ligne de signal (4) et une ligne de masse (5).

3. Montage de circuits électriques selon la revendication 1 ou 2, dans lequel le courant qui circule dans la ligne d'alimentation commune (6) est un courant continu (CC).

4. Montage de circuits électriques selon l'une quelconque des revendications 1 à 3, dans lequel ladite au moins une unité de télécommunication (3) comprend un moyen redresseur (8) et un moyen de stockage de charge (9) connecté en série au moyen redresseur (8).

5. Montage de circuits électriques selon la revendication 4, dans lequel le moyen redresseur est une diode de redressement (8) à court temps de transition et le moyen de stockage de charge est un condensateur (9) assez largement dimensionné pour assurer la consommation d'énergie totale de son unité de télécommunication (3).

6. Montage de circuits électriques selon l'une quelconque des revendications 1 à 5, dans lequel les moyens de commutation sont un transistor MOS à canal N ou un dispositif à commutation rapide semblable (7).

7. Montage de circuits électriques selon l'une quelconque des revendications 1 à 6, dans lequel les signaux qui sont transmis par l'intermédiaire du bus multiplex bifilaire (4, 5) sont numériques.

8. Montage de circuits électriques selon l'une quelconque des revendications 1 à 7, dans lequel les moyens de commutation (7) sont commandés, au moyen de leur terminal de saisie de commandes, par un moyen capteur (10) qui détecte les niveaux des signaux dans le bus multiplex bifilaire (4, 5).

9. Montage de circuits électriques selon la revendication 8, dans lequel le moyen capteur est un comparateur de tensions (10).

10. Montage de circuits électriques selon l'une quelconque des revendications 1 à 9, dans lequel l'unité centrale (1) de contrôle de bus comprend :
a) des moyens de génération (11) de canaux multiplex, avec des moyens d'adressage pour adresser ladite au moins une unité de télécommunication (3),
b) des moyens de réception multiplex (12, 13) pour recevoir et collecter les signaux numériques transmis par l'intermédiaire du bus multiplex bifilaire (4, 5), et
c) des moyens de traitement de signaux multiplex (14, 15) pour traiter les signaux numériques transmis par l'intermédiaire du bus multiplex bifilaire (4, 5).

11. Montage de circuits électriques selon la revendication 10 dans lequel, par le biais d'une connexion au bus multiplex bifilaire (4, 5), les moyens de génération (11) de canaux multiplex sont connectés tant aux moyens de réception multiplex (12, 13) qu'à ladite au moins une unité de télécommunication (3) ayant une adresse dans le système multiplex bifilaire.

12. Montage de circuits électriques selon la revendication 10 ou 11, dans lequel les moyens de génération (11) de canaux multiplex comprennent un moyen de génération d'impulsions d'horloge (113) et un moyen de génération d'impulsions (115) qui génère un train d'impulsions (16) dont les impulsions correspondent à différents canaux temporels de transmission.

13. Montage de circuits électriques selon la revendication 12, dans lequel les moyens de réception multiplex (12, 13) comprennent des moyens décodeurs par lesquels les moyens de réception multiplex (12, 13) sont activés pendant au moins un canal temporel de transmission qui leur est attribué.
